# EUROPEAN PATENT APPLICATION

(11) **EP 4 848 709 A1**
(43) Date of publication of application: **02.12.2026**
(21) Application number: 24950973.8
(22) Date of filing: 14.08.2024
(51) Int. Cl.: H04N 13/128, H04N 13/00

(54) **VIDEO PROCESSING METHOD AND APPARATUS, ELECTRONIC DEVICE, STORAGE MEDIUM, AND PROGRAM PRODUCT**

(71) Applicant: BOE Technology Group Co., Ltd., Beijing 100015 (CN)
(72) Inventor: CUI, Tenghe, Beijing 100176 (CN); WANG, Zhixin, Beijing 100176 (CN); JIANG, Xiaotian, Beijing 100176 (CN); SUN, Xuan, Beijing 100176 (CN)
(74) Representative: AWA Sweden AB
(86) International application number: PCT/CN2024/111941
(87) International publication number: WO 2026/036288

(57) **Abstract**

The present disclosure provides a video processing method, a video processing apparatus, an electronic device, a storage medium, and a program product, which relate to the field of video processing and artificial intelligence technologies. A specific implementation solution of the method includes: determining a target frame from a two-dimensional video frame sequence to be processed, where the target frame includes a foreground text; performing a depth estimation on the two-dimensional video frame sequence to be processed to obtain a target depth map corresponding to each video frame, where a depth information of the target depth map represents a fusion result of a depth information of a current video frame and a depth information of an adjacent video frame; processing a mask image and the target depth maps respectively corresponding to adjacent video frames of the target frame in the two-dimensional video frame sequence to be processed, so as to generate a target image; and processing the target image and the target depth maps respectively corresponding to the adjacent video frames of the target frame based on the position and a predetermined disparity relationship, so as to generate a target viewpoint image including the foreground text, and outputting a three-dimensional video based on the target viewpoint image.

## Description

### TECHNICAL FIELD

The present disclosure relates to the field of video processing and artificial intelligence technologies, and in particular to the fields of computer vision and deep learning technologies. More specifically, the present disclosure relates to a video processing method, a video processing apparatus, an electronic device, a storage medium, and a program product.

### BACKGROUND

Three-dimensional (3D) video is synthesized by three-dimensional software according to actual requirements, by constructing scenes and building models in a virtual three-dimensional world in a computer according to real sizes of objects to be presented, producing realistic materials and lighting, and configuring camera motion effects. Compared with two-dimensional (2D) video, 3D video may provide users with a more immersive visual experience.

It should be noted that the information disclosed in the above background section is merely intended to enhance understanding of the background of the present disclosure, and therefore may include information that does not constitute prior art known to those of ordinary skill in the art.

### SUMMARY

The present disclosure provides a video processing method, a video processing apparatus, an electronic device, a storage medium, and a program product.

According to a first aspect, the present disclosure provides a video processing method, including: determining a target frame from a two-dimensional video frame sequence to be processed, where the target frame includes a foreground text; performing a depth estimation on the two-dimensional video frame sequence to be processed to obtain a target depth map corresponding to each video frame, where a depth information of the target depth map represents a fusion result of a depth information of a current video frame and a depth information of an adjacent video frame; processing a mask image and the target depth maps respectively corresponding to adjacent video frames of the target frame in the two-dimensional video frame sequence to be processed, so as to generate a target image, where the target image includes a complete image information of the target frame, and the mask image is obtained by masking the target frame based on a position of the foreground text in the target frame; and processing the target image and the target depth maps respectively corresponding to the adjacent video frames of the target frame based on the position and a predetermined disparity relationship, so as to generate a target viewpoint image including the foreground text, and outputting a three-dimensional video based on the target viewpoint image.

According to a second aspect, the present disclosure provides a video processing apparatus, including: a determination module configured to determine a target frame from a two-dimensional video frame sequence to be processed, where the target frame includes a foreground text; a depth estimation module configured to perform a depth estimation on the two-dimensional video frame sequence to be processed to obtain a target depth map corresponding to each video frame, where a depth information of the target depth map represents a fusion result of a depth information of a current video frame and a depth information of an adjacent video frame; a processing module configured to process a mask image and the target depth maps respectively corresponding to adjacent video frames of the target frame in the two-dimensional video frame sequence to be processed, so as to generate a target image, where the target image includes a complete image information of the target frame, and the mask image is obtained by masking the target frame based on a position of the foreground text in the target frame; and a generating module configured to process the target image and the target depth maps respectively corresponding to the adjacent video frames of the target frame based on the position and a predetermined disparity relationship, so as to generate a target viewpoint image including the foreground text, and output a three-dimensional video based on the target viewpoint image.

According to a third aspect, the present disclosure provides an electronic device, including: at least one processor; and a memory communicatively connected to the at least one processor, where the memory stores instructions executable by the at least one processor, and the instructions are configured to, when executed by the at least one processor, cause the at least one processor to perform the method described above.

According to a fourth aspect, the present disclosure provides a non-transitory computer-readable storage medium storing computer instructions, where the computer instructions are configured to cause a computer to perform the method described above.

According to a fifth aspect, the present disclosure provides a computer program product including a computer program, where the computer program is configured to, when executed by a processor, implement the method described above.

It should be understood that the content described in this section is not intended to identify key or essential features of embodiments of the present disclosure, nor is it intended to limit the scope of the present disclosure. Other features of the present disclosure will become readily apparent from the following description.

### BRIEF DESCRIPTION OF THE DRAWINGS

The accompanying drawings are provided to facilitate a better understanding of the present solution and do not constitute a limitation on the present disclosure. In the accompanying drawings:
FIG. 1 shows a schematic diagram of an exemplary architecture to which a video processing method and a video processing apparatus according to embodiments of the present disclosure may be applied;
FIG. 2 shows a flowchart of a video processing method according to an embodiment of the present disclosure;
FIG. 3A shows a schematic diagram of determining a target frame in a video processing method according to an embodiment of the present disclosure;
FIG. 3B shows a schematic diagram of determining a target frame in a video processing method according to another embodiment of the present disclosure;
FIG. 4 shows a schematic diagram of generating a target depth map in a video processing method according to an embodiment of the present disclosure;
FIG. 5 shows a schematic diagram of model training for generating an initial depth map in a video processing method according to an embodiment of the present disclosure;
FIG. 6 shows an exemplary architecture diagram of a network for generating an initial depth map according to an embodiment of the present disclosure;
FIG. 7 shows an exemplary architecture diagram of a network for generating a target depth map according to an embodiment of the present disclosure;
FIG. 8 shows an exemplary architecture diagram of a network for generating a target image according to an embodiment of the present disclosure;
FIG. 9 shows an exemplary architecture diagram of a network for generating a target viewpoint image according to an embodiment of the present disclosure;
FIG. 10 shows a flowchart of a video processing method according to another embodiment of the present disclosure;
FIG. 11 shows a block diagram of a video processing apparatus according to an embodiment of the present disclosure; and
FIG. 12 shows a schematic block diagram of an electronic device for performing the video processing method according to an embodiment of the present disclosure.

### DETAILED DESCRIPTION OF EMBODIMENTS

To make the objectives, technical solutions, and advantages of embodiments of the present disclosure clearer, the technical solutions of embodiments of the present disclosure are described below in a clear and complete manner with reference to the accompanying drawings in embodiments of the present disclosure. Obviously, the described embodiments are merely some embodiments of the present disclosure, rather than all embodiments. All additional embodiments obtained by those of ordinary skill in the art without inventive effort based on the embodiments described herein shall fall within the protection scope of the present disclosure. It should be noted that the same or similar reference numerals are used throughout the drawings to represent the same elements. In the following description, some specific embodiments are provided for illustrative purposes only and should not be construed as limiting the present disclosure in any way, but merely as examples of embodiments of the present disclosure. Conventional structures or configurations will be omitted when they may obscure the understanding of the present disclosure. It should be noted that the shapes and sizes of components shown in the drawings do not reflect actual sizes or proportions, but are merely schematic representations of embodiments of the present disclosure.

Unless otherwise defined, technical terms or scientific terms used in embodiments of the present disclosure shall have the ordinary meanings understood by those skilled in the art. The terms "first," "second," and the like used in embodiments of the present disclosure do not indicate any order, quantity, or importance, but are merely used to distinguish different components.

Since the shooting and production cycle of 3D video is very long, it is difficult for 3D video content to meet user demands. Methods for converting 2D video into 3D video in related examples may effectively alleviate the shortage of 3D video content. However, for videos including foreground text, the converted 3D video still suffers from problems such as edge jitter, font deformation, and poor continuity of video scenes during playback, which degrades user experience.

In view of this, embodiments of the present disclosure provide a video processing method. By fusing a depth information of a current video frame with a depth information of an adjacent video frame to obtain a target depth map corresponding to each video frame, edge jitter of the converted 3D video during playback may be effectively reduced. By filling an image content into a video frame including a foreground text using the depth information of the adjacent video frame, a complete image may be obtained, thereby further improving continuity of image content in video scenes. Based on a position of the foreground text and a predetermined disparity relationship, a target viewpoint image including the foreground text may be generated using a target image and the target depth maps respectively corresponding to the adjacent video frames, which further improves depth continuity of video scenes and reduces the probability of font deformation.

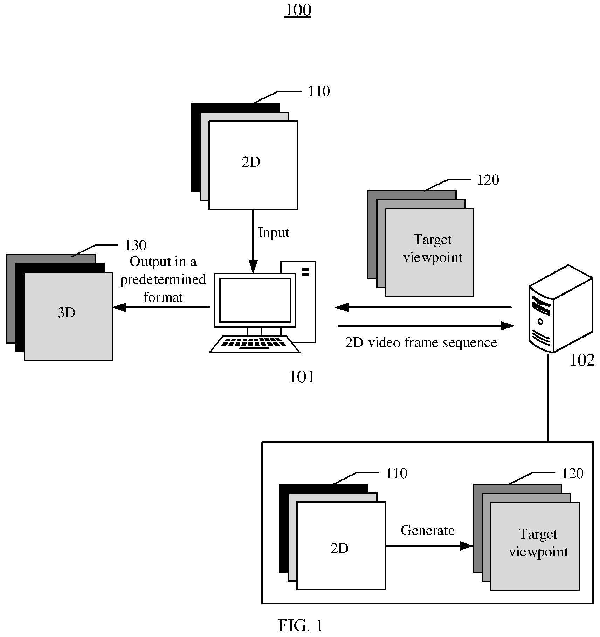

FIG. 1 shows a schematic diagram of an exemplary architecture to which a video processing method and a video processing apparatus according to embodiments of the present disclosure may be applied.

As shown in FIG. 1, the exemplary architecture 100 may include a terminal device 101 and a server 102. A user may input a 2D video frame sequence 110 into the terminal device 101. The terminal device 101 may then transmit the 2D video frame sequence 110 to the server 102. The server 102 may generate an image sequence 120 of a target viewpoint by performing the video processing method according to embodiments of the present disclosure, and transmit the image sequence 120 of the target viewpoint to the terminal device 101. The terminal device 101 may then use each video frame in the 2D video frame sequence 110 as a left-viewpoint image and use each image in the image sequence 120 of the target viewpoint as a right-viewpoint image, and output a three-dimensional video 130 according to a predetermined format based on the 2D video frame sequence 110 and the image sequence 120 of the target viewpoint.

It should be noted that the video processing method provided in embodiments of the present disclosure may also be performed by the terminal device 101. For example, the 2D video frame sequence 110 may be pre-stored in the terminal device 101 or input into the terminal device 101. The terminal device 101 may first generate an image sequence 120 of a target viewpoint by performing the video processing method according to embodiments of the present disclosure. Then, the terminal device 101 may use each video frame in the 2D video frame sequence 110 as a left-viewpoint image and use each image in the image sequence 120 of the target viewpoint as a right-viewpoint image, and output a three-dimensional video 130 according to a predetermined format based on the 2D video frame sequence 110 and the image sequence 120 of the target viewpoint.

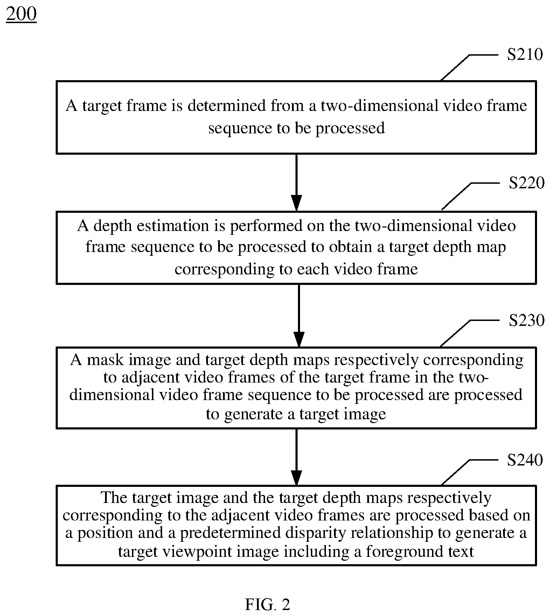

FIG. 2 shows a flowchart of a video processing method according to an embodiment of the present disclosure.

As shown in FIG. 2, the method 200 may include operations S210 to S240.

In operation S210, a target frame is determined from a two-dimensional video frame sequence to be processed.

In operation S220, a depth estimation is performed on the two-dimensional video frame sequence to be processed to obtain a target depth map corresponding to each video frame.

In operation S230, a mask image and target depth maps respectively corresponding to adjacent video frames of the target frame in the two-dimensional video frame sequence to be processed are processed to generate a target image.

In operation S240, the target image and the target depth maps respectively corresponding to the adjacent video frames are processed based on a position and a predetermined disparity relationship to generate a target viewpoint image including a foreground text, and a three-dimensional video is output based on the target viewpoint image.

According to embodiments of the present disclosure, the target frame includes a foreground text. The foreground text may include at least one of the following: subtitles used to display video speech information, bullet-screen comments used to display user comment information, and subtitles used in a game video to display the number of times a target object in the video is operated by a user, and the like. When determining the target frame, each video frame including a foreground text may be determined as a target frame, or a target frame may be determined from a plurality of video frames corresponding to the same foreground text based on a predetermined frame extraction strategy. The predetermined frame extraction strategy may be determined according to requirements of an actual application scenario, which is not specifically limited in embodiments of the present disclosure. For example, the predetermined frame extraction strategy may be extracting frames at equal time intervals or extracting frames based on scene changes. Therefore, the number of target frames may be associated with the frame extraction strategy. For example, the number of target frames may be greater than or equal to the number of scene types in a plurality of video frames corresponding to the same foreground text.

For example, a text recognition may be performed on each video frame in the two-dimensional video frame sequence to be processed based on optical character recognition (OCR) technology, so as to determine the target frame.

A depth information of an image refers to a distance information from a viewpoint to a target object in the image, where the viewpoint may be an apparatus used to capture the image. By performing a depth estimation on each video frame, the depth information of each video frame may be obtained. Since a distance between the viewpoint and the target object changes over time during video capture, the depth information of each pixel point obtained by performing a depth estimation on a single-frame image also changes over time.

However, the depth information obtained by performing a depth estimation on a single-frame image breaks temporal continuity of the depth information between adjacent video frames, which leads to severe edge jitter of target objects. Therefore, in embodiments of the present disclosure, a depth estimation is performed on the two-dimensional video frame sequence to be processed, and the depth information of each video frame is fused with the depth information of adjacent video frames to obtain a target depth map that represents a fusion result of the depth information of the current video frame and the depth information of the adjacent video frames. Accordingly, the temporal information of the adjacent video frames is effectively combined to reduce edge jitter of target objects in video frames.

According to embodiments of the present disclosure, the fusion of the depth information of the adjacent video frames may be achieved by smoothing processing of the depth information. For example, a plurality of regions may be determined from a plurality of adjacent video frames, where the regions may be divided according to types of target objects, or may be divided according to foreground and background, which is not specifically limited in embodiments of the present disclosure. With an average depth of pixel points in each region as a vertical coordinate and a time instant corresponding to a video frame as a horizontal coordinate, a smooth curve representing variation of the average depth of the region over time may be constructed. A depth value obtained after smoothing processing is used as a depth of the region.

According to embodiments of the present disclosure, the fusion of the depth information of adjacent video frames may alternatively be achieved using a trained neural network, for example, a temporal transformer network based on an attention mechanism.

According to embodiments of the present disclosure, for a non-target frame that does not include foreground text, a target viewpoint image corresponding to the non-target frame may be generated based on a target depth map corresponding to the non-target frame and the target depth maps corresponding to video frames adjacent to the non-target frame.

For example, the target depth map corresponding to the non-target frame and the target depth maps corresponding to the video frames adjacent to the non-target frame may be input into a temporal network based on a multi-head attention mechanism, so as to output a target viewpoint image corresponding to the non-target frame, where the target viewpoint may be a right viewpoint. The temporal network based on the multi-head attention mechanism may be a transformer network. The temporal network based on the multi-head attention mechanism may be obtained through supervised training by using right-viewpoint images corresponding to sample images as labels.

For the target frame, since the foreground text has sharp edges and a depth difference between the foreground text and the target objects in the background is very large, when the target frame is directly processed using the temporal network based on the multi-head attention mechanism described above, the output target viewpoint image is prone to problems such as font deformation of the foreground text or occlusion of the foreground text. Therefore, embodiments of the present disclosure may be implemented to first process a background image of the target frame to generate a target viewpoint image, and then embed the foreground text to generate a target viewpoint image including the foreground text.

However, in the target frame, the foreground text region occludes the background image. If the background image of the target frame is processed directly, the foreground text region of the generated target viewpoint image may have an incomplete background, which interrupts the continuity of the video scene.

Therefore, embodiments of the present disclosure are implemented to first mask the target frame based on a position of the foreground text in the target frame to obtain a mask image, and then process the mask image and the target depth maps respectively corresponding to the adjacent video frames of the target frame in the two-dimensional video frame sequence to be processed. By using the continuity of the video scene among adjacent video frames, the foreground text region of the target frame may be filled to generate a target image including complete image information of the target frame.

For example, a network for generating the target image may be obtained using the same network architecture as the temporal network based on the multi-head attention mechanism described above, through supervised training using sample images as labels.

According to embodiments of the present disclosure, the network for generating a target viewpoint image described above may be used to process the target image and the target depth maps respectively corresponding to the adjacent video frames to generate a target viewpoint image that does not include foreground text. Then, the foreground text may be embedded into the target viewpoint image based on a position of the foreground text in the target frame and a predetermined disparity relationship, to generate a target viewpoint image including the foreground text. With the target frame as a left-viewpoint image and the target viewpoint image as a right-viewpoint image, a three-dimensional video may be output according to a predetermined output format.

According to embodiments of the present disclosure, by fusing the depth information of the current video frame with the depth information of adjacent video frames to obtain a target depth map corresponding to each video frame, edge jitter of the converted 3D video during playback may be effectively reduced. By filling the image content into a video frame including foreground text using the depth information of the adjacent video frames, a complete image may be obtained, thereby further improving the continuity of image content in video scenes. Based on the position of the foreground text and the predetermined disparity relationship, a target viewpoint image including the foreground text may be generated using the target image and the target depth maps respectively corresponding to the adjacent video frames, which further improves the depth continuity of video scenes and reduces the probability of font deformation.

According to embodiments of the present disclosure, in a video including speech subtitles, for a plurality of adjacent video frames corresponding to the same speech subtitle, a position of the foreground text region in which the speech subtitle is located remains the same, and the content of the speech subtitle is also identical.

When a foreground text recognition is performed on a single-frame image based on the OCR technology, it is difficult to verify the accuracy of the text recognition. However, temporal continuity exists between adjacent video frames. For example, for the same speech subtitle, the text content in the foreground text regions of adjacent video frames within a display duration of the speech subtitle remains the same.

In view of this, embodiments of the present disclosure may utilize the temporal continuity of the foreground text between adjacent video frames to further improve the accuracy of foreground text recognition.

For example, determining a target frame from a two-dimensional video frame sequence to be processed may include the following operations: first performing a foreground text recognition on the two-dimensional video frame sequence to be processed to determine a foreground text region in which the foreground text is located; and determining an *i*-th video frame as the target frame in response to a difference between a text content in the target regions of the adjacent video frames of the *i*-th video frame and a text content in the foreground text region in the *i*-th video frame being less than a first predetermined threshold, where the positions of the target regions in the adjacent video frames are the same as the position of the foreground text region in the *i*-th video frame.

According to embodiments of the present disclosure, the adjacent video frames may include an (*i*-1)-th video frame and an (*i*+1)-th video frame adjacent to the *i*-th video frame. Alternatively, with the *i*-th video frame as a center, adjacent video frames may be taken at equal intervals before and after the *i*-th video frame within a target duration. The target duration may be a display duration of the text in the foreground text region. Since the display duration of the text in the foreground text region is proportional to a number of characters, a display speed parameter may be set according to a specific application scenario.

For example, in a speech subtitle scenario, the display speed parameter may be an average human speech rate of 0.2 seconds per character. If the number of characters in the foreground text region of the *i*-th video frame is M, the display duration of the text in the foreground text region may be determined as 0.2×M seconds. Therefore, with the *i*-th video frame as a center, a plurality of adjacent video frames may be taken at equal intervals within 0.2×M seconds before and after the *i*-th video frame.

According to embodiments of the present disclosure, the first predetermined threshold may represent a threshold of a number of different characters. The number of different characters may be determined by comparing, character by character, the text content in the target region and the text content in the foreground text region in a predetermined direction, for example, from left to right. When the number of different characters is less than the first predetermined threshold, the *i*-th video frame may be determined as a target frame.

According to embodiments of the present disclosure, the first predetermined threshold may alternatively represent a threshold of a text distance, such as a Euclidean distance. The text distance between the text content in the target region and the text content in the foreground text region may be calculated, and when the text distance is less than the first predetermined threshold, the *i*-th video frame may be determined as a target frame.

According to embodiments of the present disclosure, by comparing the text content of the foreground text in the regions at the same position of adjacent video frames, and by utilizing the temporal continuity of the foreground text of adjacent video frames, the accuracy of foreground text recognition may be further improved.

In the actual application scenario, a background image in a video frame may also include text. For example, the background image may include a building on which a textual sign is provided. When performing a text recognition using the OCR technology, the text on the textual sign may also be recognized as the foreground text.

In view of this, embodiments of the present disclosure may be implemented to further improve the accuracy of foreground text region recognition by combining other feature information of the foreground text.

For example, the text in the foreground text region is typically presented in a horizontal direction or a vertical direction in the target frame. Therefore, it is possible to obtain positions of a plurality of characters in the foreground text region of the *i*-th video frame, determine a text direction of the plurality of characters by fitting the positions of the plurality of characters, and determine the *i*-th video frame as a target frame in response to the text direction being a predetermined direction.

According to embodiments of the present disclosure, the positions of the plurality of characters may be coordinates of the plurality of characters in the *i*-th video frame. Any linear fitting method may be used to perform linear fitting on the coordinates of the plurality of characters to determine the text direction of the plurality of characters. The linear fitting method includes, but is not limited to, a least squares method and a robust fitting method, and embodiments of the present disclosure do not limit the linear fitting method.

According to embodiments of the present disclosure, whether the text direction of the plurality of characters is the predetermined direction may be determined according to an angle between a curve obtained by linear fitting and a straight line in the predetermined direction. For example, when the angle is smaller than 5°, it may be determined that the text direction of the plurality of characters is the predetermined direction, so as to determine that the plurality of characters in the region are foreground text, and further determine the *i*-th video frame as a target frame.

According to embodiments of the present disclosure, by using the text direction of the foreground text as an auxiliary feature for determining the foreground text region, interference caused by the text in the background region to the foreground text region may be effectively reduced, thereby further improving the recognition accuracy of the foreground text region.

According to embodiments of the present disclosure, a text attribute in the foreground text region, such as color, gradient, or saturation, is significantly different from a text attribute in the background image. Therefore, it is possible to detect the text attribute of a plurality of characters in the foreground text region of the *i*-th video frame, and determine the *i*-th video frame as a target frame in response to the text attribute being a predetermined attribute.

For example, the characters in the foreground text region may have a white body with black edges, whereas the characters on a textual sign on a building in the background image may be red. The character color of the plurality of characters in the foreground text region of the *i*-th video frame may be detected, and when the plurality of characters have a white body with black edges, it may be determined that the text in the region is foreground text, and then the *i*-th video frame may be determined as a target frame.

According to embodiments of the present disclosure, the position of the foreground text region is related to the video scene. For example, in an audiovisual video, speech subtitles are typically located in a lower portion of the image, while bullet-screen comments are typically located in an upper portion of the image; in a game video, chat subtitles are typically located in a lower-left portion of the image, while subtitles used to record the number of user operations are typically located above an operated object. Therefore, the position of the foreground text region may be used to assist in determining the target frame. For example, in response to the position of the foreground text region in the *i*-th video frame falling within a predetermined position range, the *i*-th video frame may be determined as a target frame.

According to embodiments of the present disclosure, by using the text attribute and/or the position of the foreground text region as auxiliary features for determining the foreground text region, the recognition accuracy of the foreground text region may be improved without increasing additional computational processes, thereby reducing requirements on hardware processing performance.

With development of speech recognition technology, the accuracy of speech recognition is increasingly improved. The text content in the foreground text region may be further determined using a speech recognition result to improve the recognition accuracy of the foreground text region.

According to embodiments of the present disclosure, a speech recognition may be performed on audio corresponding to the *i*-th video frame to obtain a speech recognition result; and the *i*-th video frame may be determined as a target frame in response to a difference between the speech recognition result and the text content in the foreground text region of the *i*-th video frame being less than the first predetermined threshold.

For example, the speech recognition result of the audio corresponding to the *i-*th video frame may be "the weather is sunny today," while the text content in the foreground text region obtained through OCR recognition may be "XX Building." It may be determined that the speech recognition result is inconsistent with the text content in the foreground text region, indicating that the foreground text region recognized based on the OCR technology is incorrect, and therefore the *i*-th video frame may be determined as a non-target frame.

For example, the speech recognition result of the audio corresponding to the *i-*th video frame may be "the weather is sunny today." The foreground text region obtained through the OCR recognition may include region S₁ and region S₂, where the text content in region S₁ may be "the weather is sunny today," and the text content in region S₂ may be "XX Building." It may be determined that the speech recognition result is the same as the text content in region S₁, and therefore region S₁ may be determined as the foreground text region of the *i*-th video frame, and the *i*-th video frame may be determined as a target frame.

According to embodiments of the present disclosure, by further determining the text content in the foreground text region using the speech recognition result of the corresponding audio, the recognition accuracy of the foreground text region may be further improved.

Due to the sharp edges of the foreground text, there is a large depth difference between the foreground text and the background image. However, when identifying the foreground text based on the OCR technology, the spatial depth information of the text is often neglected. Therefore, the depth information in the target depth map may be used to determine whether a video frame includes a foreground text.

According to embodiments of the present disclosure, binarization processing may be performed on the foreground text region based on the target depth map corresponding to the *i*-th video frame, so as to obtain a first depth information corresponding to the text and a second depth information corresponding to the background; and in response to a difference between the first depth information and the second depth information being greater than a second predetermined threshold, the *i*-th video frame may be determined as a target frame.

According to embodiments of the present disclosure, the first depth information may represent an average depth of pixel points in a text region, and the second depth information may represent an average depth of pixel points in a background region. A depth difference between the first depth information and the second depth information may be obtained based on any mathematical operation.

For example, the depth difference between the first depth information and the second depth information may be obtained based on Equation (1). $Δ dep = \frac{\left|\overline{{dep}_{word}}-\overline{{dep}_{back}}\right|}{max \left(\overline{{dep}_{word}}, \overline{{dep}_{back}}\right)}$ (1) where △ *dep* represents a depth difference, *d̅e̅p̅_̅{̅w̅o̅r̅d̅}̅* represents a first depth information, and *d̅e̅p̅_̅{̅b̅a̅c̅k̅}̅* represents a second depth information.

According to embodiments of the present disclosure, in a process of converting a 2D video into a 3D video, performing a depth estimation on each video frame is a necessary step. Therefore, by utilizing the depth difference between the text region and the background region, the recognition accuracy of the foreground text region may be improved without introducing any additional information, thereby further improving detection accuracy of the target frame.

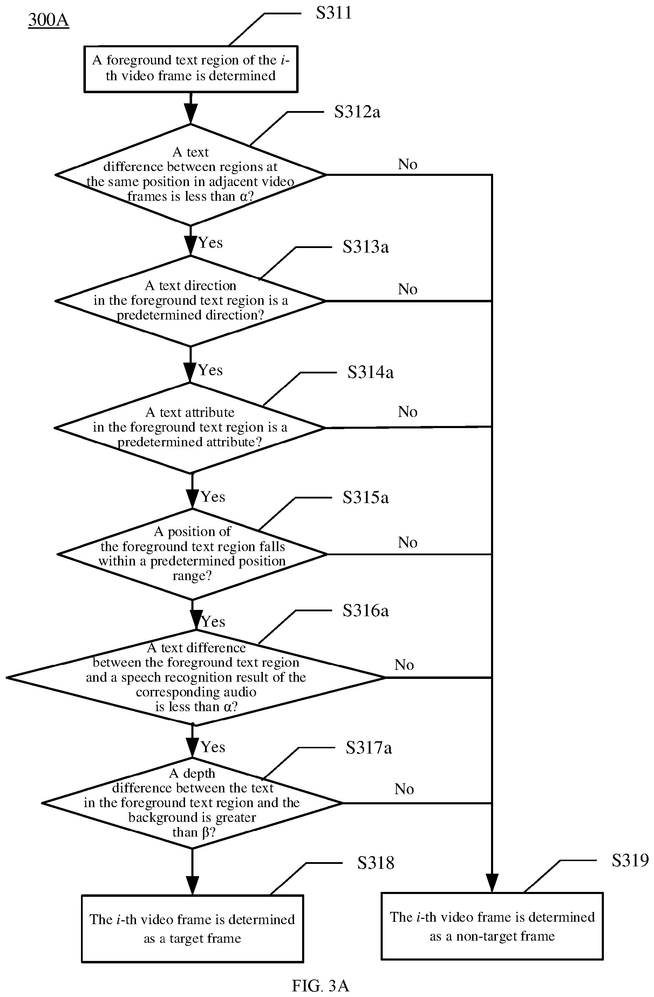

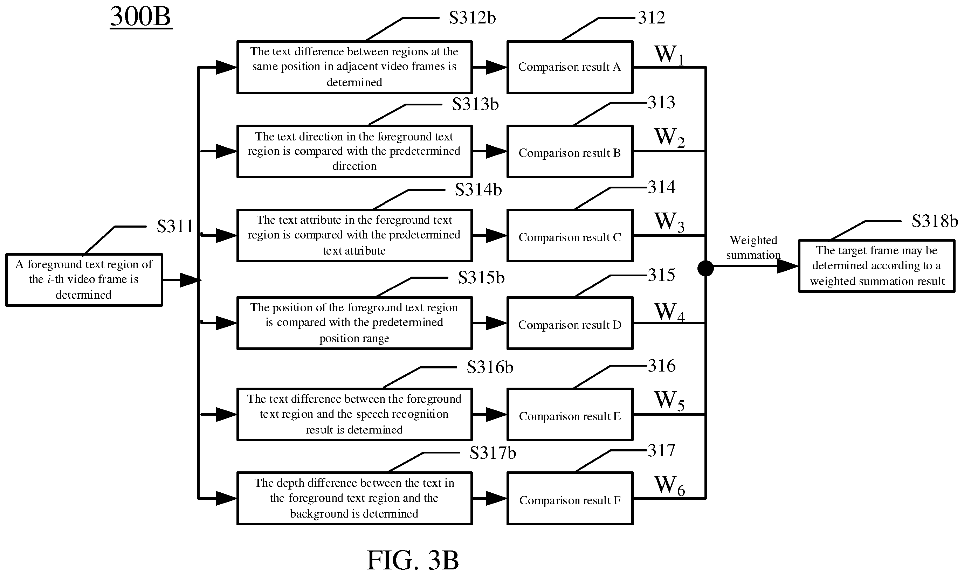

According to embodiments of the present disclosure, the plurality of methods for determining the target frame described above may be arbitrarily combined according to requirements of the application scenario. The combination may be implemented in a serial or parallel manner. The following description further explains, with reference to FIG. 3A and FIG. 3B, the method for determining the target frame in a combination manner.

FIG. 3A shows a schematic diagram of determining a target frame in a video processing method according to an embodiment of the present disclosure.

As shown in FIG. 3A, in a method 300A for determining a target frame, the plurality of methods for determining the target frame described above are performed in a serial combination manner. The method 300A may include operations S311 to S319.

In operation S311, a foreground text region of the *i*-th video frame is determined.

In operation S312a, it is determined whether a text difference between regions at the same position in adjacent video frames is less than α. If yes, operation S313a is performed; otherwise, operation S319 is performed.

In operation S313a, it is determined whether a text direction in the foreground text region is a predetermined direction. If yes, operation S314a is performed; otherwise, operation S319 is performed.

In operation S314a, it is determined whether a text attribute in the foreground text region is a predetermined attribute. If yes, operation S315a is performed; otherwise, operation S319 is performed.

In operation S315a, it is determined whether a position of the foreground text region falls within a predetermined position range. If yes, operation S316a is performed; otherwise, operation S319 is performed.

In operation S316a, it is determined whether a text difference between the foreground text region and a speech recognition result of the corresponding audio is less than α. If yes, operation S317a is performed; otherwise, operation S319 is performed.

In operation S317a, it is determined whether a depth difference between the text in the foreground text region and the background is greater than β. If yes, operation S318 is performed; otherwise, operation S319 is performed.

In operation S318, the *i*-th video frame is determined as a target frame.

In operation S319, the *i*-th video frame is determined as a non-target frame.

According to embodiments of the present disclosure, by determining whether the current frame includes a foreground text from different dimensions in a serial combination manner, the accuracy of target frame determination may be further improved.

According to embodiments of the present disclosure, the plurality of methods for determining the target frame described above may also be performed in a parallel combination manner. For example, respective weights may be determined for a plurality of target parameters; and the target frame may be determined by performing, according to the weights, weighted processing on determination results respectively corresponding to the plurality of target parameters. The plurality of target parameters include at least two of the following: the text direction, the text attribute, the position of the foreground text region, the difference in text content, and the depth difference between text and background.

FIG. 3B shows a schematic diagram of determining a target frame in a video processing method according to another embodiment of the present disclosure.

As shown in FIG. 3B, in a method 300B for determining a target frame, the plurality of methods for determining the target frame described above are performed in a parallel combination manner. The method 300B may include operations S311 to S318b.

In operation S311, the foreground text region of the *i*-th video frame is determined.

In operation S312b, the text difference between regions at the same position in adjacent video frames is determined to obtain a comparison result A 312.

In operation S313b, the text direction in the foreground text region is compared with the predetermined direction to obtain a comparison result B 313.

In operation S314b, the text attribute in the foreground text region is compared with the predetermined text attribute to obtain a comparison result C 314.

In operation S315b, the position of the foreground text region is compared with the predetermined position range to obtain a comparison result D 315.

In operation S316b, the text difference between the foreground text region and the speech recognition result is determined to obtain a comparison result E 316.

In operation S317b, the depth difference between the text in the foreground text region and the background is determined to obtain a comparison result F 316.

According to embodiments of the present disclosure, weights W₁ to W₆ may respectively correspond to the comparison results A to F. In operation S318b, the target frame may be determined according to a weighted summation result.

According to embodiments of the present disclosure, by determining whether the current frame includes a foreground text from different dimensions in a parallel combination manner, the accuracy of target frame determination may be improved, and the data processing efficiency may be improved.

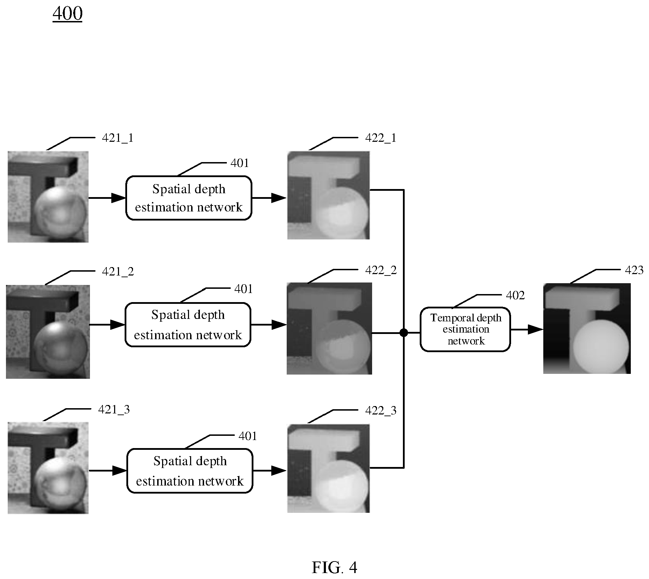

The following description explains, with reference to FIG. 4 to FIG. 7, the method for generating a target depth map by fusing the depth information of adjacent video frames using a trained deep neural network.

According to embodiments of the present disclosure, performing a depth estimation on the two-dimensional video frame sequence to be processed to generate a target depth map corresponding to each video frame may include the following operations: performing a depth estimation on each video frame to obtain an initial depth map corresponding to each video frame; and processing the initial depth map corresponding to the *i*-th video frame, the initial depth map corresponding to the (*i*-1)-th video frame, and the initial depth map corresponding to the (*i*+1)-th video frame based on an attention mechanism to generate a target depth map corresponding to the *i*-th video frame, where *i* is an integer greater than 1 and less than or equal to *I*.

FIG. 4 shows a schematic diagram of generating a target depth map in a video processing method according to an embodiment of the present disclosure.

As shown in FIG. 4, in an embodiment 400, video frames 421_1 to 421_3 are input into a spatial depth estimation network 401 to output corresponding initial depth maps 422_1 to 422_3. Then, the initial depth maps 422_1 to 422_3 are input into a temporal depth estimation network 402 to output a target depth map 423.

According to embodiments of the present disclosure, a video frame adjacent to the *i*-th video frame may be a video frame temporally adjacent to the *i*-th video frame in an original video frame sequence. However, such an approach requires a large amount of computational resources. Therefore, in the actual application scenario, a video frame sequence to be processed may be first extracted from the original video frame sequence based on a frame extraction strategy, and a video frame in the video frame sequence to be processed that is temporally adjacent to the *i*-th video frame may be used as an adjacent video frame. The frame extraction strategy may be determined according to requirements of the application scenario, such as extracting frames at equal time intervals or extracting key frames, which is not specifically limited in embodiments of the present disclosure.

According to embodiments of the present disclosure, since a video frame has a large image resolution, directly inputting the video frame into the spatial depth estimation network imposes high requirements on hardware resources. Therefore, each video frame may be compressed first to obtain an image having a predetermined resolution, for example, an image having a resolution of 448×448. Then, an image feature of the image having the predetermined resolution may be processed using the spatial depth estimation network to obtain an initial depth map.

According to embodiments of the present disclosure, the spatial depth estimation network may be trained using a depth information of each pixel in sample images as labels.

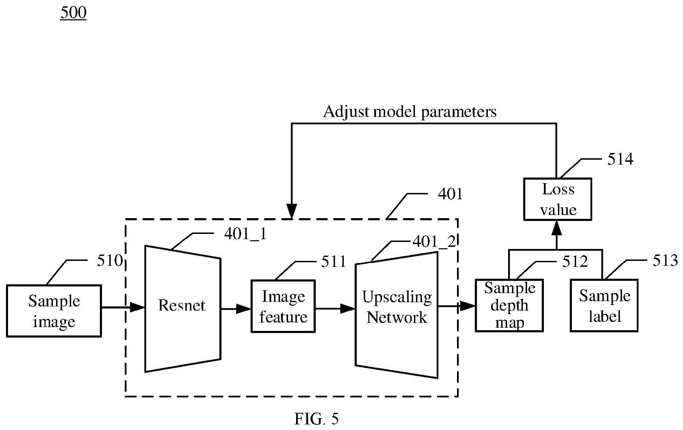

FIG. 5 shows a schematic diagram of model training for generating an initial depth map in a video processing method according to an embodiment of the present disclosure.

As shown in FIG. 5, in an embodiment 500, the spatial depth estimation network 401 may include a ResNet 401_1 and an upscaling network 401_2. A sample image 510 may be an image having a resolution of 448×448. The sample image 510 is input into the ResNet 401_1 to output an image feature 511. The image feature 511 is processed by the upscaling network 401_2 to generate a sample depth map 512. A sample label 513 may represent a ground-truth depth map of the sample image, and the ground-truth depth map of the sample image includes a ground-truth depth information of each pixel.

According to embodiments of the present disclosure, a loss value 514 may be obtained based on a target loss function according to the sample depth map 512 and the sample label 513. Model parameters of the spatial depth estimation network 401 are adjusted using the loss value 514 until a predetermined number of training iterations is reached or the loss value converges, thereby obtaining a trained spatial depth estimation network 401.

When a target detection is performed on an image, a pixel loss in an edge region has little influence on detection accuracy. However, when a depth estimation is performed on the video frame, the pixel loss in the edge region may cause large fluctuations in depth values, thereby resulting in edge jitter of target objects. Therefore, in embodiments of the present disclosure, a weight factor for the edge region is added on the basis of a pixel-level loss function. The target loss function is shown in Equation (2): $Loss_S 1 = \frac{{α}_{Laplacian} + 1}{2} Loss_pixel$ (2) where α*_{Laplacian}* represents a Laplacian weight coefficient, and Loss_pixel represents a pixel-level loss function.

According to embodiments of the present disclosure, the pixel-level loss function may be selected from functions capable of calculating pixel-wise loss, for example, a cross-entropy loss function, a pixel-wise loss function, a BerHu loss function, and the like.

For example, the pixel-level loss function may be expressed as shown in Equation (3): $Loss_pixel = \left\{\begin{matrix}\left|{label}_{\left(x, y\right)}-{pre}_{{spatial}_{\left(x, y\right)}}\right| & , & \left|{label}_{\left(x, y\right)}-{pre}_{{spatial}_{\left(x, y\right)}}\right| \leq δ \\ \frac{{\left({label}_{\left(x, y\right)}-{pre}_{{spatial}_{\left(x, y\right)}}\right)}^{2} + {δ}^{2}}{2 δ} & , & others\end{matrix}\right.$ (3) where *label*_{(*x,y*)} represents a ground-truth depth information corresponding to a pixel (x, y) in the sample label, and pre_{spatial_{(*x,y*)}} represents a predicted depth information corresponding to the pixel (x, y) in the sample depth map. *δ* = 0.2*max*(|*label*_{(*x,y*)} - pre_{spatial_{(*x,y*)}}|) .

According to embodiments of the present disclosure, *α_{Laplacian}* may be a normalization parameter obtained using Equation (4): ${α}_{{Laplacian}_{\left(x, y\right)}} = \frac{label ∗ {Laplacian}_{\left(x, y\right)} - min \left(label∗{Laplacian}_{\left(x, y\right)}\right)}{label ∗ {Laplacian}_{\left(x, y\right)} - min \left(label∗{Laplacian}_{\left(x, y\right)}\right)}$ (4) where *label* _{*} *Laplacian*_{(x*,y*)} represents a result of performing Laplacian edge detection with a 3×3 convolution kernel on the sample depth map.

It should be noted that the weight factor $\frac{{α}_{Laplacian} + 1}{2}$ in Equation (2) indicates that a weight of an edge region is approximately twice that of a non-edge region. The weight factor may also be adjusted according to requirements of the actual application scenario.

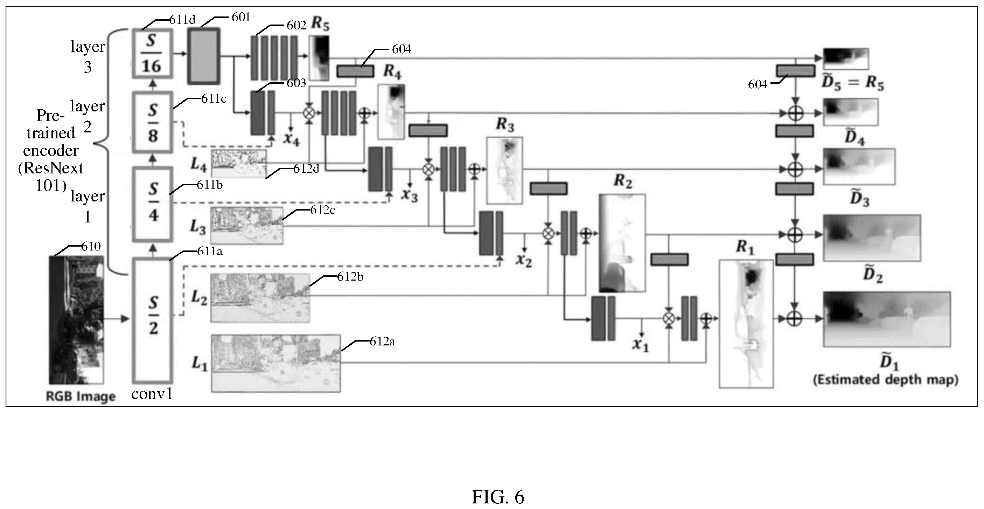

The following description explains, with reference to FIG. 6, a process of performing a depth estimation on a single-frame image using the spatial depth estimation network.

FIG. 6 shows an exemplary architecture diagram of a network for generating an initial depth map according to an embodiment of the present disclosure.

As shown in FIG. 6, first, a predetermined-resolution image 610 is input into ResNet for feature extraction, so as to obtain multi-scale image features, for example, an S/2-scale image feature 611a, an S/4-scale image feature 611b, an S/8-scale image feature 611c, and an S/16-scale image feature 611d.

Then, the S/16-scale image feature 611d is input into an ASPP (atrous spatial pyramid pooling) layer 601 for sampling, and a sampling result is input into a Conv block (convolutional layer) 602 to output an S/16-scale depth map R₅. In addition, the sampling result is input into an Upconv block (up-convolutional block) 603 for feature upsampling to obtain an S/8-scale sampled feature. The S/8-scale image feature 611c is subtracted from the S/8-scale sampled feature to obtain an S/8-scale difference feature L₄ 612d.

Subsequently, the S/16-scale depth map R₅ is subjected to bilinear upsampling 604 to obtain an S/8-scale depth feature. The S/8-scale depth feature, the S/8-scale difference feature 612d, and the S/8-scale image feature 611c are concatenated and then subjected to convolution. A convolution result is then summed with the S/8-scale difference feature 612d to output an S/8-scale depth map R₄. By analogy, through layer-by-layer upsampling, the scale of the depth map is gradually increased. In each upsampling, a difference between an upsampling result and the image feature at the same scale is calculated, thereby obtaining an S/4-scale difference feature L₃ 612c, an S/2-scale difference feature L₂ 612b, and an initial-scale difference feature L₁ 612a. A depth estimation is then performed after concatenating the depth feature, the difference feature, and the image feature at the same scale, so that the edges in the depth map gradually become clearer, until an initial depth map D₁ having the same scale as the predetermined-resolution image 610 is obtained.

According to embodiments of the present disclosure, by introducing the Laplacian weight coefficient into the target loss function, the trained spatial depth estimation network may accurately identify the depth information of object edges in video frames.

According to embodiments of the present disclosure, processing the initial depth map corresponding to the *i*-th video frame, the initial depth map corresponding to the (*i*-1)-th video frame, and the initial depth map corresponding to the (*i*+1)-th video frame based on the attention mechanism to generate a target depth map corresponding to the *i*-th video frame may include the following operations: performing a feature extraction on the initial depth map corresponding to the *i*-th video frame, the initial depth map corresponding to the (*i*-1)-th video frame, and the initial depth map corresponding to the (*i*+1)-th video frame to generate respective first intermediate feature maps; and fusing the respective first intermediate feature maps based on the attention mechanism to generate the target depth map corresponding to the *i*-th video frame.

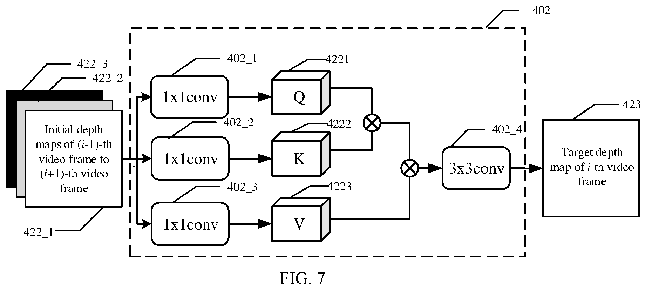

FIG. 7 shows an exemplary architecture diagram of a network for generating a target depth map according to an embodiment of the present disclosure.

As shown in FIG. 7, a temporal depth estimation module 402 may include three 1×1 conv layers 402_1 to 402_3 and one 3×3 conv layer 402_4. First, an initial depth map of each video frame passes through the three 1×1 conv layers 402_1 to 402_3, to generate a query matrix Q4221, a key matrix K4222, and a value matrix V4223, respectively.

For example, an initial depth map 422_2 of the *i*-th video frame passes through the 1×1 conv layer 402_1, and each element in the output query matrix Q*ᵢ* may be expressed as q*ᵢ*, as shown in Equation (5): ${q}^{i} = {W}^{q} \left({pre}_{spatial}^{i}+{pos}^{i}\right)$ (5) where *qⁱ* represents an element in the query matrix Q*ᵢ*, *w^{q}* represents a weight matrix corresponding to the query matrix Q*ᵢ*, *posⁱ* represents position encoding of the *i*-th video frame, and ${pre}_{spatial}^{i}$ represents an initial depth information of the *i*-th video frame.

For example, the initial depth map 422_2 of the *i*-th video frame passes through the 1×1 conv layer 402_2, and each element in the output key matrix K*ᵢ* may be expressed as k*ᵢ*, as shown in Equation (6): ${k}^{i} = {W}^{k} \left({pre}_{spatial}^{i}+{pos}^{i}\right)$ (6) where *kⁱ* represents an element in the key matrix K*ᵢ*, *W^{k}* represents a weight matrix corresponding to the key matrix K*ᵢ*, *posⁱ* represents position encoding of the *i*-th video frame, and ${pre}_{spatial}^{i}$ represents an initial depth information of the *i*-th video frame.

For example, the initial depth map 422_2 of the *i*-th video frame passes through the 1×1 conv layer 402_3, and each element in the output value matrix V*ᵢ* may be expressed as v*ᵢ*, as shown in Equation (7): ${v}^{i} = {W}^{v} \left({pre}_{spatial}^{i}+{pos}^{i}\right)$ (7) where *vⁱ* represents an element in the value matrix V*ᵢ*, *W^{v}* represents a weight matrix corresponding to the value matrix V*ᵢ*, *posⁱ* represents position encoding of the *i*-th video frame, and ${pre}_{spatial}^{i}$ represents an initial depth information of the *i*-th video frame.

Then, the depth information of adjacent frames is fused based on the attention mechanism, as shown in Equation (8): ${b}_{n} = {v}_{i} {\sum }_{i = n - 1}^{n + 1} softmax \left(\frac{{q}_{n} {k}_{i}}{\sqrt{{d}_{k}}}\right)$ (8) where *bₙ* represents a fusion feature, and *dₖ* represents a dimension of k.

Finally, the fusion feature is input into the 3×3 conv layer 402_4 to output a target depth map of the *i*-th video frame.

According to embodiments of the present disclosure, the temporal depth estimation network 402 may be trained using a training method similar to that of the spatial depth estimation network, with depth information of each pixel in sample images having a predetermined resolution as labels. Details thereof are not repeated herein.

According to embodiments of the present disclosure, by using the trained temporal depth estimation network to fuse the initial depth information of adjacent video frames with the initial depth information of the current video frame based on the attention mechanism, differences between depth information of single-frame images are effectively reduced, thereby further reducing object edge jitter in a video caused by depth information differences.

Since the foreground text in the target frame occludes the background image, background incompleteness may occur between multiple characters of the foreground text in the target viewpoint image. Under normal circumstances, adjacent video frames have the same background image content, although depth information may differ. Therefore, adjacent video frames may be used to fill the background image in the foreground text region of the target frame.

For example, a feature extraction may be performed respectively on the mask image and the target depth maps respectively corresponding to adjacent video frames, so as to generate respective second intermediate feature maps. The respective second intermediate feature maps are concatenated to obtain a third intermediate feature map. The third intermediate feature map is processed based on the attention mechanism to generate a first difference information between the target image and the mask image. Then, the mask image is processed based on the first difference information to generate the target image.

According to embodiments of the present disclosure, an intermediate feature map corresponding to the target depth map may include the depth features of adjacent video frames, and an intermediate feature map corresponding to the mask image may include the image feature of the mask image.

According to embodiments of the present disclosure, the attention mechanism may be a multi-head attention mechanism. By performing attention computation on mask image features and depth features in the third intermediate feature map and then performing convolution processing, the first difference information between the target image and the mask image may be generated. Then, the mask image may be merged with the first difference information to generate the target image.

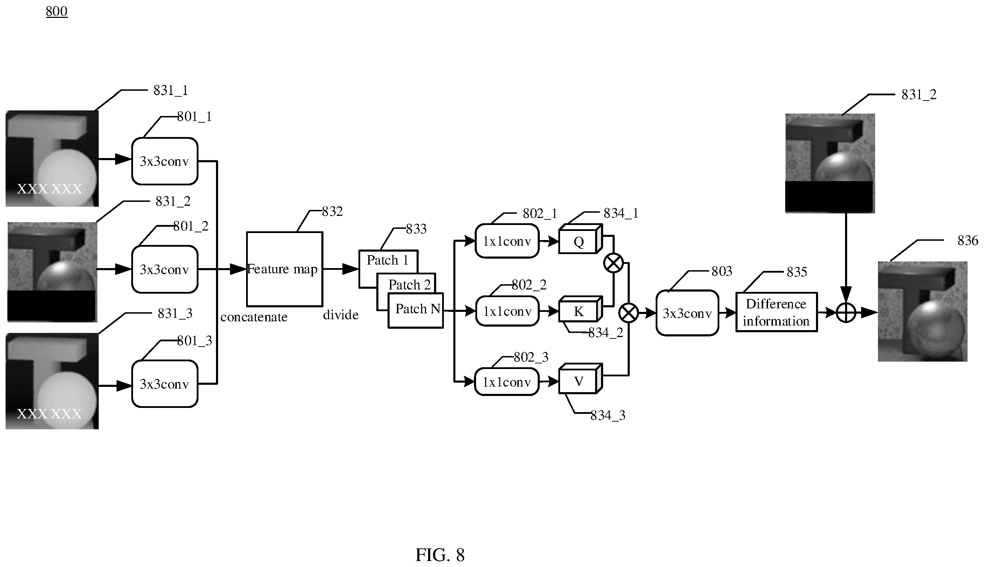

The following description explains, with reference to FIG. 8, the method for generating a target image by using the mask image and the target depth maps respectively corresponding to adjacent video frames of the target frame as described above.

FIG. 8 shows an exemplary architecture diagram of a network for generating a target image according to an embodiment of the present disclosure.

As shown in FIG. 8, in an embodiment 800, first, a mask image 831_2 of a target frame is input into a 3×3 conv layer 801_2 for feature extraction, to output an image feature of the mask image. Target depth maps 831_1 and 831_3 of adjacent video frames are respectively input into a 3×3 conv layer 801_1 and a 3×3 conv layer 801_3, to output respective depth features.

Then, the image feature of the mask image and the depth features respectively corresponding to the adjacent video frames are concatenated to obtain a feature map 832.

Subsequently, the feature map 832 (corresponding to the third intermediate feature map described above) may be divided to obtain a plurality of feature patches 833. The plurality of feature patches are processed based on an attention mechanism to generate a plurality of local features respectively corresponding to the plurality of feature patches. The plurality of local features are concatenated to obtain a global fusion feature, and the global fusion feature is processed to generate the first difference information.

For example, for Patch 1, first, Patch1 is input into three 1×1 conv layers 802_1 to 802_3, to respectively output a query matrix Q834_1, a key matrix K834_2, and a value matrix V834_3 corresponding to Patch1. Calculations are performed based on a multi-head attention mechanism to obtain a local feature corresponding to Patch1. By analogy, local features respectively corresponding to Patch 1 to Patch N may be obtained. Then, the N local features may be rearranged according to the division manner of the feature map 832, and then concatenated to generate a global fusion feature. Subsequently, the global fusion feature is input into a 3×3 conv layer 803 to output the first difference information.

Finally, the first difference information is merged with the mask image 831_2 of the target frame to output a target image 836.

According to embodiments of the present disclosure, the network shown in FIG. 8 may be trained using a training method similar to that of the spatial depth estimation network, with sample images having a predetermined resolution as labels. The difference lies in the target loss function, and other training processes are not repeated herein.

According to embodiments of the present disclosure, a target loss function for training the network shown in FIG. 8 may be expressed as shown in Equation (9): $Loss_S 2 = \frac{{α}_{Gussian} + 1}{2} Loss_pixel$ (9) where α*_{Gussian}* represents a coefficient for Gaussian smoothing performed on the foreground text region and the background region.

According to embodiments of the present disclosure, since the image feature and the depth features of the adjacent video frames are fused in the first difference information, the complete image information of the target frame includes both the content of the background image and the depth of the background image. As a result, natural filling of the foreground text region is achieved, ensuring the continuity and consistency of the visual scene between the target image and the adjacent video frames, thereby further enhancing realism of the three-dimensional video and improving user experience.

For the target frame including the foreground text, since there is a significant difference between the text depth in the foreground text region and the depth in the background region, processing the foreground text and the background region together in related examples tends to cause font deformation, resulting in a decrease in the readability and visibility of the foreground text.

In view of this, in embodiments of the present disclosure, processing the target image and the target depth maps respectively corresponding to the adjacent video frames based on the position and the predetermined disparity relationship to generate the target viewpoint image including the foreground text may include the following operations: processing the target image and the target depth maps respectively corresponding to the adjacent video frames to generate an initial viewpoint image; and filling the foreground text into the initial viewpoint image based on the position and the predetermined disparity relationship to generate the target viewpoint image.

According to embodiments of the present disclosure, the target image and the target depth maps respectively corresponding to the adjacent video frames may be processed using a trained transformer network, so that the image feature of the target image is fused with the depth information of the adjacent video frames to generate an initial viewpoint image that does not include the foreground text. The target viewpoint may be a right viewpoint, and the initial viewpoint image has the same viewpoint direction as the target viewpoint image.

According to embodiments of the present disclosure, the transformer network may be trained using a training method similar to that of the spatial depth estimation network, with right-viewpoint images of sample images including foreground text as labels. The difference lies in the target loss function, and other training processes are not repeated herein.

According to embodiments of the present disclosure, a loss function used to train the transformer network may be the pixel-level loss function described above, such as a cross-entropy loss function.

According to embodiments of the present disclosure, the predetermined disparity relationship may represent a disparity geometric relationship between a left-viewpoint image and a right-viewpoint image. A target position of the foreground text in the right-viewpoint image may be determined according to the predetermined disparity relationship and the position of the foreground text region in the *i*-th video frame. Then, the foreground text may be filled into the right-viewpoint image according to the target position.

According to embodiments of the present disclosure, by separately processing the background image and the foreground text of the video frame, a probability of font deformation of the foreground text may be reduced, thereby improving the readability and visibility of the foreground text under different viewing angles.

According to embodiments of the present disclosure, processing the target image and the target depth maps respectively corresponding to the adjacent video frames to generate an initial viewpoint image may include the following operations: performing a feature extraction on the target image and the target depth maps respectively corresponding to the adjacent video frames to generate respective fourth intermediate feature maps; concatenating the respective fourth intermediate feature maps to obtain a fifth intermediate feature map; processing the fifth intermediate feature map based on an attention mechanism to generate a second difference information between the initial viewpoint image and the target image; and processing the target image based on the second difference information to generate the initial viewpoint image.

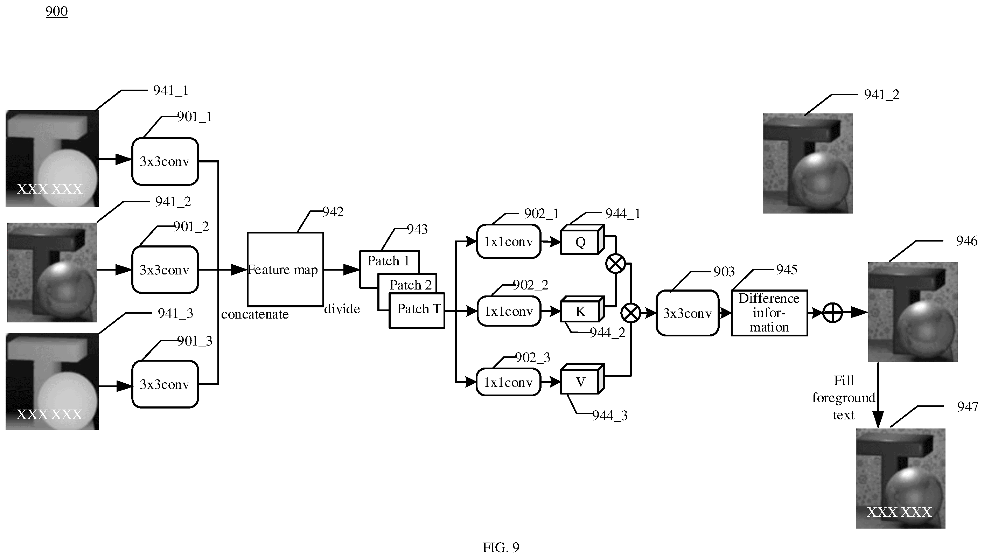

The method for generating a target viewpoint image will be described below in detail with reference to FIG. 9.

FIG. 9 shows an exemplary architecture diagram of a network for generating a target viewpoint image according to an embodiment of the present disclosure.

As shown in FIG. 9, in an embodiment 900, first, a target image 941_2 is input into a 3×3 conv layer 901_2 for feature extraction to output an image feature of the target image. Target depth maps 941_1 and 941_3 of adjacent video frames are respectively input into a 3×3 conv layer 901_1 and a 3×3 conv layer 901_3 to output respective depth features.

Then, the image feature of the target image is concatenated with the depth features respectively corresponding to the adjacent video frames to obtain a feature map 942.

Subsequently, the feature map 942 is divided to obtain a plurality of feature patches 943. For example, for Patch1, first, Patch1 is input into three 1×1 conv layers 902_1 to 902_3, to respectively output a query matrix Q944_1, a key matrix K944_2, and a value matrix V944_3 corresponding to Patch1. Calculations are performed based on a multi-head attention mechanism to obtain a local feature corresponding to Patch1. By analogy, local features respectively corresponding to Patch 1 to Patch M may be obtained. Then, the M local features may be rearranged according to a division manner of the feature map 942 and concatenated to generate a global fusion feature. Subsequently, the global fusion feature is input into a 3×3 conv layer 903 to output a second difference information.

Then, the second difference information is merged with the target image 941_2 to output an initial viewpoint image 946.

Finally, the foreground text is filled into the initial viewpoint image 946 to generate a target viewpoint image 947.

When filling the foreground text into the initial viewpoint image 946, a position of the foreground text in a left-viewpoint image is different from a position of the foreground text in a right-viewpoint image. Such a difference is not only based on a disparity geometric relationship but also includes a depth difference. Therefore, when determining the position of the foreground text in the right-viewpoint image, the depth information of the foreground text may also be taken into account.

According to embodiments of the present disclosure, the depth information of the foreground text may be determined from the target depth map corresponding to the target frame based on the position; and the foreground text may be filled into the initial viewpoint image based on the depth information of the foreground text, the position, and the predetermined disparity relationship, so as to generate a target viewpoint image.

According to embodiments of the present disclosure, the depth information of the foreground text may be an average depth information of all characters corresponding to the foreground text region.

According to embodiments of the present disclosure, a target position of the foreground text in the target viewpoint image may first be determined according to the depth information of the foreground text, the position, and the predetermined disparity relationship. Then, the foreground text may be filled into the initial viewpoint image based on the target position to generate a target viewpoint image.

For example, a target disparity may be generated according to the depth information of the foreground text and the predetermined disparity relationship, as shown in Equation (10): $d = \frac{fB}{Z}$ (10) where f represents a focal length of a virtual camera, B represents a baseline of the virtual camera, and Z represents a depth information of the foreground text.

Then, a position (x_{L} - d, y_{L}) of the foreground text in the target viewpoint image may be determined according to the target disparity and a position (x_{L}, y_{L}) of the foreground text in the target frame.

According to embodiments of the present disclosure, by filling the foreground text based on the depth information of the foreground text and the predetermined disparity relationship, the visibility and readability of the foreground text under different viewing angles are further improved.

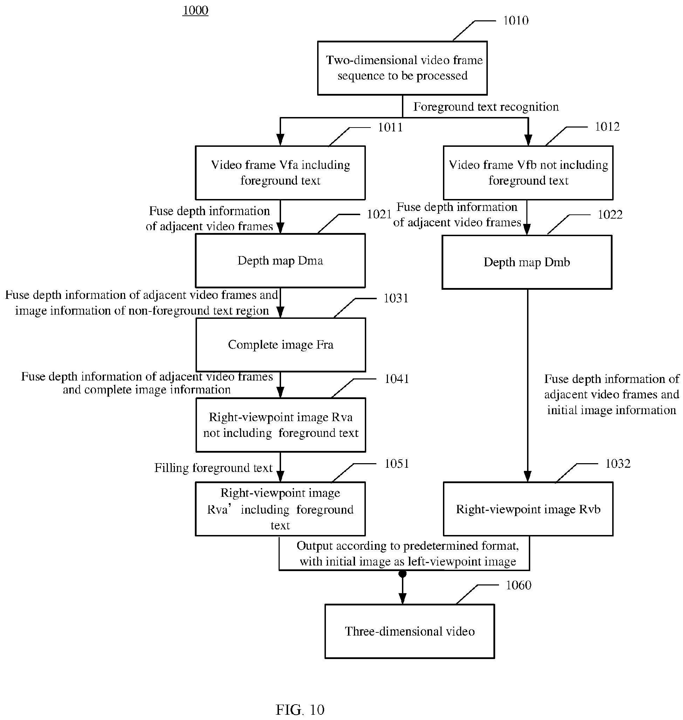

FIG. 10 shows a flowchart of a video processing method according to another embodiment of the present disclosure.

As shown in FIG. 10, in an embodiment 1000, a foreground text recognition is performed on a two-dimensional video frame sequence 1010 to be processed, to obtain a video frame Vfa 1011 including foreground text and a video frame Vfb 1012 not including foreground text.

For the video frame Vfa 1011 including foreground text, first, using depth information fusion of adjacent video frames, a depth map Dma 1021 of the video frame may be generated. Then, the depth information of the adjacent video frames may be fused with an image information of a non-foreground-text region to generate a complete image Fra 1031. Subsequently, the depth information of the adjacent video frames is fused with the information of the complete image to generate a right-viewpoint image Rva 1041 not including foreground text. Finally, the foreground text is filled into the right-viewpoint image Rva 1041 to generate a right-viewpoint image Rva' including the foreground text.

For the video frame Vfb 1012 not including foreground text, first, using the depth information fusion of adjacent video frames, a depth map Dma 1022 of the video frame may be generated. Then, the depth information of the adjacent video frames is fused with the information of an initial image to generate a right-viewpoint image Rvb.

Finally, the initial image is used as a left-viewpoint image and is concatenated with a corresponding right-viewpoint image. A three-dimensional video 1060 is then output according to a predetermined format.

According to embodiments of the present disclosure, when an aspect ratio of the initial image is a predetermined ratio, for example, the predetermined ratio may be 16:9, the left-viewpoint image and the right-viewpoint image may be directly concatenated horizontally to directly output the three-dimensional video 1060. When the aspect ratio of the initial image is greater than the predetermined ratio, black padding is symmetrically applied to upper and lower sides of the left-viewpoint image and the right-viewpoint image, respectively, to reach the predetermined ratio, and then the three-dimensional video is output. When the aspect ratio of the initial image is less than the predetermined ratio, black padding is symmetrically applied to left and right sides of the left-viewpoint image and the right-viewpoint image, respectively, to reach the predetermined ratio, and then the three-dimensional video is output.

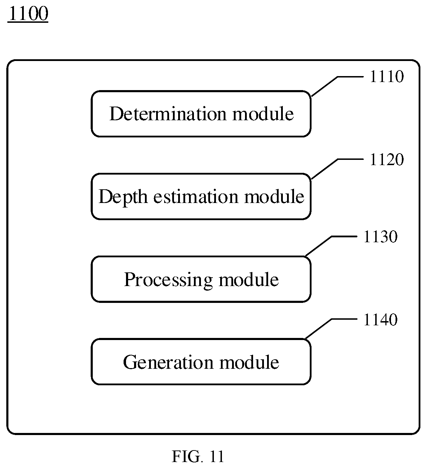

FIG. 11 shows a block diagram of a video processing apparatus according to an embodiment of the present disclosure.

As shown in FIG. 11, the apparatus 1100 may include a determination module 1110, a depth estimation module 1120, a processing module 1130, and a generation module 1140.

The determination module 1110 is configured to determine a target frame from a two-dimensional video frame sequence to be processed, where the target frame includes a foreground text.

The depth estimation module 1120 is configured to perform a depth estimation on the two-dimensional video frame sequence to be processed, to obtain a target depth map corresponding to each video frame, where a depth information of the target depth map represents a fusion result of depth information of a current video frame and depth information of adjacent video frames.

The processing module 1130 is configured to process a mask image and target depth maps respectively corresponding to adjacent video frames of the target frame in the two-dimensional video frame sequence to be processed, to generate a target image, where the target image includes a complete image information of the target frame; and the mask image is obtained by masking the target frame based on a position of the foreground text in the target frame.

The generating module 1140 is configured to process the target image and the target depth maps respectively corresponding to the adjacent video frames based on a position and a predetermined disparity relationship, to generate a target viewpoint image including the foreground text, and to output a three-dimensional video based on the target viewpoint image.

According to embodiments of the present disclosure, a non-transitory computer-readable storage medium storing computer instructions is provided, where the computer instructions are used to cause a computer to perform the method described above.

According to embodiments of the present disclosure, a computer program product is provided, including a computer program, wherein the computer program, when executed by a processor, implements the method described above.

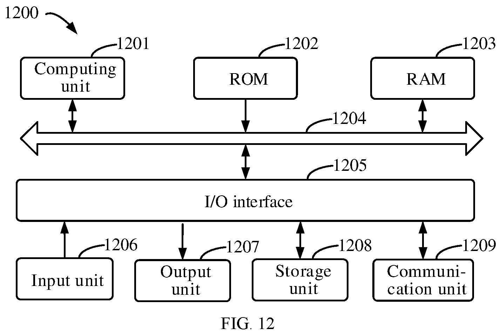

FIG. 12 shows a schematic block diagram of an exemplary electronic device 1200 that may be used to implement the video processing method according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 12, the electronic device 1200 includes a computing unit 1201 which may perform various appropriate actions and processes according to a computer program stored in a read only memory (ROM) 1202 or a computer program loaded from a storage unit 1208 into a random access memory (RAM) 1203. In the RAM 1203, various programs and data necessary for an operation of the electronic device 1200 may also be stored. The computing unit 1201, the ROM 1202 and the RAM 1203 are connected to each other through a bus 1204. An input/output (I/O) interface 1205 is also connected to the bus 1204.

A plurality of components in the electronic device 1200 are connected to the input/output (I/O) interface 1205, including: an input unit 1206, such as a keyboard, or a mouse; an output unit 1207, such as displays or speakers of various types; a storage unit 1208, such as a disk, or an optical disc; and a communication unit 1209, such as a network card, a modem, or a wireless communication transceiver. The communication unit 1209 allows the electronic device 1200 to exchange information/data with other devices through a computer network such as Internet and/or various telecommunication networks.

The computing unit 1201 may be various general-purpose and/or dedicated processing assemblies having processing and computing capabilities. Some examples of the computing units 1201 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 1201 executes various methods and processes described above, such as the video processing method. For example, in some embodiments, the video processing method may be implemented as a computer software program which is tangibly embodied in a machine-readable medium, such as the storage unit 1208. In some embodiments, the computer program may be partially or entirely loaded and/or installed in the electronic device 1200 via the ROM 1202 and/or the communication unit 1209. The computer program, when loaded in the RAM 1203 and executed by the computing unit 1201, may execute one or more steps in the video processing method described above. Alternatively, in other embodiments, the computing unit 1201 may be used to perform the video processing method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the data processing method of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, a server of a distributed system, or a server combined with block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A video processing method, comprising:
determining a target frame from a two-dimensional video frame sequence to be processed, wherein the target frame comprises a foreground text;
performing a depth estimation on the two-dimensional video frame sequence to be processed to obtain a target depth map corresponding to each video frame, wherein a depth information of the target depth map represents a fusion result of a depth information of a current video frame and a depth information of an adjacent video frame;
processing a mask image and the target depth maps respectively corresponding to adjacent video frames of the target frame in the two-dimensional video frame sequence to be processed, so as to generate a target image, wherein the target image comprises a complete image information of the target frame, and the mask image is obtained by masking the target frame based on a position of the foreground text in the target frame; and
processing the target image and the target depth maps respectively corresponding to the adjacent video frames of the target frame based on the position and a predetermined disparity relationship, so as to generate a target viewpoint image comprising the foreground text, and outputting a three-dimensional video based on the target viewpoint image.

2. The method according to claim 1, wherein the two-dimensional video frame sequence to be processed comprises *I* video frames, *I* is an integer greater than 1; and the determining a target frame from a two-dimensional video frame sequence to be processed comprises:
performing a foreground text recognition on the two-dimensional video frame sequence to be processed to determine a foreground text region in which the foreground text is located; and
determining an *i*-th video frame as the target frame in response to a difference between a text content in a target region of an adjacent video frame of the *i*-th video frame and a text content in the foreground text region of the *i*-th video frame being less than a first predetermined threshold, wherein a position of the target region in the adjacent video frame is the same as a position of the foreground text region in the *i*-th video frame, and *i* is an integer greater than 1 and less than or equal to *I*.

3. The method according to claim 2, further comprising:
acquiring positions of a plurality of characters in the foreground text region of the *i*-th video frame;
determining a text direction of the plurality of characters by fitting the positions of the plurality of characters; and
determining the *i*-th video frame as the target frame in response to the text direction being a predetermined direction.

4. The method according to claim 2 or 3, further comprising:
detecting a text attribute of a plurality of characters in the foreground text region of the *i*-th video frame; and
determining the *i*-th video frame as the target frame in response to the text attribute being a predetermined attribute.

5. The method according to any one of claims 2 to 4, further comprising:
determining the *i*-th video frame as the target frame in response to a position of the foreground text region in the *i*-th video frame falling within a predetermined position range.

6. The method according to any one of claims 2 to 5, further comprising:
performing a speech recognition on audio corresponding to the *i*-th video frame to obtain a speech recognition result; and
determining the *i*-th video frame as the target frame in response to a difference between the speech recognition result and the text content in the foreground text region of the *i*-th video frame being less than the first predetermined threshold.

7. The method according to any one of claims 2 to 6, further comprising:
performing binarization processing on the foreground text region based on the target depth map corresponding to the *i*-th video frame, so as to obtain a first depth information corresponding to a text and a second depth information corresponding to a background; and
determining the *i*-th video frame as the target frame in response to a difference between the first depth information and the second depth information being greater than a second predetermined threshold.

8. The method according to any one of claims 3 to 7, further comprising:
determining respective weights for a plurality of target parameters; and
determining the target frame by performing, based on the weights, weighted processing on determination results respectively corresponding to the plurality of target parameters;
wherein the plurality of target parameters comprise at least two of: a text direction, a text attribute, a position of the foreground text region, a difference in text content, and a depth difference between text and background.

9. The method according to any one of claims 1 to 8, wherein the performing a depth estimation on the two-dimensional video frame sequence to be processed to obtain a target depth map corresponding to each video frame comprises:
performing a depth estimation on each video frame to obtain an initial depth map corresponding to each video frame; and
processing the initial depth map corresponding to an *i*-th video frame, the initial depth map corresponding to an (*i*-1)-th video frame, and the initial depth map corresponding to an (*i*+1)-th video frame based on an attention mechanism, so as to generate a target depth map corresponding to the *i-*th video frame, where *i* is an integer greater than 1 and less than or equal to *I*.

10. The method according to claim 9, wherein the performing a depth estimation on each video frame to obtain an initial depth map corresponding to each video frame comprises:
for each video frame, performing image compression on the video frame to obtain an image having a predetermined resolution; and
processing an image feature of the image having the predetermined resolution using a target network to generate the initial depth map, wherein the target network is trained using a depth information of each pixel in sample images having the predetermined resolution as a label.

11. The method according to claim 9 or 10, wherein the processing the initial depth map corresponding to an *i*-th video frame, the initial depth map corresponding to an (*i*-1)-th video frame, and the initial depth map corresponding to an (*i*+1)-th video frame based on an attention mechanism so as to generate a target depth map corresponding to the *i*-th video frame comprises:
performing feature extraction on the initial depth map corresponding to the *i*-th video frame, the initial depth map corresponding to the (*i*-1)-th video frame, and the initial depth map corresponding to the (*i*+1)-th video frame to generate respective first intermediate feature maps; and
fusing the respective first intermediate feature maps based on the attention mechanism to generate the target depth map corresponding to the *i*-th video frame.

12. The method according to any one of claims 1 to 11, wherein the processing a mask image and the target depth maps respectively corresponding to the adjacent video frames of the target frame in the two-dimensional video frame sequence to be processed so as to generate a target image comprises:
performing feature extraction on the mask image and the target depth maps respectively corresponding to the adjacent video frames to generate respective second intermediate feature maps;
concatenating the respective second intermediate feature maps to obtain a third intermediate feature map;
processing the third intermediate feature map based on an attention mechanism to generate a first difference information between the target image and the mask image; and
processing the mask image based on the first difference information to generate the target image.

13. The method according to claim 12, wherein the processing the third intermediate feature map based on an attention mechanism to generate a first difference information between the target image and the mask image comprises:
dividing the third intermediate feature map to obtain a plurality of feature patches;
processing the plurality of feature patches based on the attention mechanism to generate a plurality of local features respectively corresponding to the plurality of pixel patches;
concatenating the plurality of local features to obtain a global fusion feature; and
processing the global fusion feature to generate the first difference information.

14. The method according to any one of claims 1 to 13, wherein the processing the target image and the target depth maps respectively corresponding to the adjacent video frames of the target frame based on the position and a predetermined disparity relationship so as to generate a target viewpoint image comprising the foreground text comprises:
processing the target image and the target depth maps respectively corresponding to the adjacent video frames to generate an initial viewpoint image, wherein the initial viewpoint image has the same viewpoint direction as the target viewpoint image; and
filling the foreground text into the initial viewpoint image based on the position and the predetermined disparity relationship, so as to generate the target viewpoint image.

15. The method according to claim 14, wherein the processing the target image and the target depth maps respectively corresponding to the adjacent video frames to generate an initial viewpoint image comprises:
performing feature extraction on the target image and the target depth maps respectively corresponding to the adjacent video frames to generate respective fourth intermediate feature maps;
concatenating the respective fourth intermediate feature maps to obtain a fifth intermediate feature map;
processing the fifth intermediate feature map based on an attention mechanism to generate a second difference information between the initial viewpoint image and the target image; and
processing the target image based on the second difference information to generate the initial viewpoint image.

16. The method according to claim 14 or 15, wherein the filling the foreground text into the initial viewpoint image based on the position and the predetermined disparity relationship so as to generate the target viewpoint image comprises:
determining, based on the position, a depth information of the foreground text from the target depth map corresponding to the target frame; and
filling the foreground text into the initial viewpoint image according to the depth information of the foreground text, the position, and the predetermined disparity relationship, so as to generate the target viewpoint image.

17. The method according to claim 16, wherein the filling the foreground text into the initial viewpoint image according to the depth information of the foreground text, the position, and the predetermined disparity relationship so as to generate the target viewpoint image comprises:
determining a target position of the foreground text in the target viewpoint image according to the depth information of the foreground text, the position, and the predetermined disparity relationship; and
filling the foreground text into the initial viewpoint image based on the target position to generate the target viewpoint image.

18. A video processing apparatus, comprising:
a determination module configured to determine a target frame from a two-dimensional video frame sequence to be processed, wherein the target frame comprises a foreground text;
a depth estimation module configured to perform a depth estimation on the two-dimensional video frame sequence to be processed to obtain a target depth map corresponding to each video frame, wherein a depth information of the target depth map represents a fusion result of a depth information of a current video frame and a depth information of an adjacent video frame;
a processing module configured to process a mask image and the target depth maps respectively corresponding to adjacent video frames of the target frame in the two-dimensional video frame sequence to be processed, so as to generate a target image, wherein the target image comprises a complete image information of the target frame, and the mask image is obtained by masking the target frame based on a position of the foreground text in the target frame; and
a generating module configured to process the target image and the target depth maps respectively corresponding to the adjacent video frames of the target frame based on the position and a predetermined disparity relationship, so as to generate a target viewpoint image comprising the foreground text, and output a three-dimensional video based on the target viewpoint image.

19. An electronic device, comprising:
at least one processor; and
a memory communicatively connected to the at least one processor,
wherein the memory stores instructions executable by the at least one processor, and the instructions are configured to, when executed by the at least one processor, cause the at least one processor to perform the method according to any one of claims 1 to 17.

20. A non-transitory computer-readable storage medium storing computer instructions, wherein the computer instructions are configured to cause a computer to perform the method according to any one of claims 1 to 17.

21. A computer program product comprising a computer program, wherein the computer program is configured to, when executed by a processor, implement the method according to any one of claims 1 to 17.
